# EUROPEAN PATENT APPLICATION

(11) **EP 4 712 256 A1**
(43) Date of publication of application: **18.03.2026**
(21) Application number: 24199940.8
(22) Date of filing: 12.09.2024
(51) Int. Cl.: H01M 50/655, H01M 10/04, H01M 50/169, H01M 50/188, H01M 10/0525, H01M 10/44, H01M 50/152

(54) **ENERGY STORAGE CELL AND MANUFACTURING METHOD THEREFOR**

(71) Applicant: UniverCell Holding GmbH, 24220 Flintbek (DE)
(72) Inventor: Flessau, Leif, 24105 Kiel (DE); Yu, Thomas, Brookline, MA 02446 (US); Permien, Stefan, 24113 Molfsee (DE); Strack, Marius, 24116 Kiel (DE)
(74) Representative: Habermann, Hruschka & Schnabel

(57) **Abstract**

The present invention provides a rechargeable energy storage cell (1), in which a degassing port (12) is forming part of the anode (2) when the cell (1) is in use. Further, a corresponding manufacturing method is provided.

## Description

The present invention relates to rechargeable energy storage cells and to a corresponding manufacturing method. In particular, the present invention relates to rechargeable batteries of cylindrical shape and size, e.g. known under the specification 18650 and 21700 of the lithium-ion type, or even smaller scale.

Such batteries are generally well-known and in common use in a wide variety of applications. These comprise a power generator and storage element, in case of cylindrically shaped cells commonly made of the so-called jellyroll structure of spirally wound cathode, anode and separator elements or foils which structure is contained in an entirely hermetically sealed and closed cylindrical housing comprising an electrolyte composition therebetween. Commonly, the upper end of the housing forms the electrical terminal of the anode, while the opposite lower end of the housing forms the cathode, accordingly. In most of the cases the anode forming the upper end or cap of the housing is made of nickel-plated steel which will be crimped to the cylindrical shell of the shell, in which the lower end forming the terminal cathode is integral with the cylinder. Crimping proves to be cumbersome with the drawback of substandard goods and of leaving areas still prone to corrosion.

Further, the formation of gas during the formation process for creating the solid electrolyte interface (SEI) in the manufacturing method of rechargeable cells of e.g. the prismatic or pouch type is well known. Gas needs to be removed therefore via corresponding ports or the storage elements are kept open during this production step.

However, in rechargeable cells of smaller scale, such as the above-mentioned cylindrical cells or even smaller, such as small-scale coin-, cylindrical- or prismatic-shaped cells, typically used in some medical and consumer devices, the electrolytes currently employed in such rechargeable cells are of such nature that gas generation, usually during the formation step of the manufacturing process so far, if anyhow, has been of such minor extent that no increase in volume of the housing resulted therefor and that it had no impact on the stability and impermeability of the housing. Even further, remaining gas, if it stayed in the housing anyhow, did not really negatively affect the later performance of such cells.

However, in continuously striving for better performance and higher energy density of such batteries when it comes to charging and storage time during use on the one hand and to effectiveness during manufacturing as regards formation and a possible pre-charging for the SEI creation on the other, new electrolyte compositions and substances have come to the focus recently. For instance, when more advanced materials, such as e.g. silicon, are used as the active material in anodes in more advanced and high-energy cell designs, new electrolyte compositions are often needed to deal with such more advanced active materials in electrodes, which due to their electro-chemical characteristics and nature, however, in turn may result in higher gas generation. Higher gas generation rates, in view of volume increase, could thus be detrimental to the housing stability and also to the performance characteristics of such batteries later on, if the gas remains in the housing. Electro-chemical side reactions with electrode materials may occur.

In consideration thereof it is an object of the present invention to counteract possible disadvantages and problems associated with such gas generation in rechargeable energy storage cells of the mentioned type.

Therefore, in a first aspect, the present invention provides a rechargeable energy storage cell having the features of claim 1.

According to the invention, a rechargeable energy storage cell comprises a housing which contains a power generator and storage element and which housing comprises opposite to each other a first electrical terminal, at one of its ends and a second electrical terminal for the opposite charge at the other of its ends, while the end comprising the first electrical terminal is being closed by a lid, said lid comprising an opening and said opening being configured to provide a degassing port during at least one manufacturing step for said cell and being further configured to receive an insert. According to the invention said insert is being configured to form part of said first electrical terminal.

Preferably, the first electrical terminal forms the anode while the second electrical terminal forms the cathode of the energy storage cell.

The lid may be made from aluminium or stainless steel and accordingly could be mechanically crimped to the remaining cylindrically shell of the housing, but according to the invention is preferably laser-welded thereto. In that the lid basically extends over the entire upper face of the cylinder to the circumferential edge of it, it allows for laser-welding which eases the manufacturing of the housing and reduces the costs associated therewith. Areas prone to corrosion are avoided.

According to the invention the insert is circumferentially insulated against the lid by means of a ring-shaped insulation element, i.e. gasket which could be made from a polymer, glass or ceramic or compounds thereof. The purpose of this component is to electrically insulate the outer circular metal ring of the lid, which via the cylindrical housing is electrically connected to the second electrical terminal, preferably the cathode, from the inner terminal of the insert being and forming the first electrical terminal, i.e. then the anode.

Thus, said insert is formed by a circular terminal element which is connected inside the housing of the cell to the power generator and storage element contained therein. The insert is ideally made from copper or a suitable copper alloy but any other electrically conductive material may be used.

According to the invention the insert comprises a central opening thereby forming an opening port for the degassing process in a corresponding manufacturing method step as will be explained later.

Said opening is formed in such way to receive a plug which is substantially form-congruent to the shape of the opening. The purpose of the plug is to hermetically seal the opening and thereby the entire housing of the cell. The plug may be made of any suitable polymer material, which does not interact with the electrolyte.

According to a preferred embodiment said plug and said opening form a conical seal, but any suitable geometry is possible, basically depending on the shape and size of the rechargeable cell.

In order to finalize the upper first electrical terminal, according to the invention, a cap of such shape and dimension is provided that it overlaps the circular terminal element of the insert and that it is connected thereto in an electrically conductive manner. For that purpose, the insert protrudes from the upper face of the lid to the extent that the cap, then being formed as a disc having a circular edge, circumferentially surrounds the insert, either with or without distance to the outer circular surface of the insert.

The cap can be made from aluminium or stainless steel and could be laser-welded to the insert, which is particularly enabled by the afore-mentioned geometric structure of the cap. Thus, the manufacturing of such cells is further enhanced in this respect.

In a preferred embodiment, the plug to seal the central opening in the insert is directly attached to the cap in a preassembled matter, i.e. centrally fixed to the underside of the disc thereby protruding towards the insert. This enables that during mounting the plug is simply inserted into the central opening of the insert till the cap comes into continuous contact with the upper face of the insert in a flat way. The shape and dimensions of the plug on the one hand and the shape and dimensions of the opening or through-hole in the insert are selected in such a way that a hermetical seal is achieved between them by way of a form-fit or press-fit or a combination thereof when the cap is lying flat on the insert.

Then, the mounting can be finalized by laser-welding the cap to the insert in that a circular pattern is welded along the perimeter of the cap, which enhances the manufacturing of such cells even further.

In an alternative embodiment, the plug may be separate from the cap and tightly fixed into the opening of the insert to hermetically seal the opening before the cap then will be finally welded to the top of the insert. This offers the advantage that such separate plug can be also temporarily used as a sealing device during the manufacturing process, e.g. after the electrolyte injection but before the degassing step, to provide better and safe handling of the cell, e.g. for transport.

The effect of providing an opening in the element of the housing forming the first electrical terminal, preferably the anode, is to enable a degassing when needed during the formation process applied to the electrolyte during the manufacturing of the rechargeable energy storage cell.

Accordingly, in a second aspect, the present invention provides a method for manufacturing a rechargeable energy storage cell having the features of claim 10.

The method comprises the steps of
- providing a housing being open at one end thereof and comprising opposite to each other a first electrical terminal at one of its ends and a second electrical terminal for the opposite charge cathode at the other of its end;
- inserting a power generator and storage element into the housing and filling an electrolyte into said power generator and storage element;
- fixing a lid to the open end of the housing, said lid comprising an opening;
- inserting an insert into said opening of the lid under intermediate assembly of an insulation element electrically insulating said insert from said lid, said insert comprising an opening;
- electrically conductively connecting the insert with said power generator and storage element;
- performing a formation process;
- performing a degassing process for discharging gas being formed by the electrolyte during the formation process through the opening of the insert;
- inserting a plug into the opening of the insert after the degassing process has been completed to hermetically seal said opening;
- fixing a cap to the insert in an electrically conductive manner; and
- performing an aging process.

In a further step of the method the plug is preassembled to the cap and said plug is inserted into said opening of the insert in that said cap lies flat on said insert.

Preferably, said cap is laser-welded to said insert.

In a further step of the method a pre-charging process may be performed before the formation process, which proves to be advantageous to some kind of electrodes and electrolyte compositions.

Still in a further step of the method the opening in the insert is temporarily sealed during the formation process, which could be done preferably by a removable plug or similar, preferably using already the plug being intended for hermetically sealing said opening after finalized assembly of the cell.

Further advantages and features do become apparent from the description of the embodiments as shown in the accompanying drawings, in which
Fig. 1a shows a cylindrically shaped rechargeable energy storage cell;
Fig. 1b shows a cross-section of said cell;
Fig. 2 shows enlarged cross-sectional views of an anode and a cathode of said cell;
Fig. 3a shows a cross-section of the lid with the insert according to the invention;
Fig. 3b shows a perspective view of the lid with the insert according to the invention;
Fig. 4a shows a cross-section of the cap with the plug according to the invention;
Fig. 4b shows a perspective view of the cap from above;
Fig. 4c shows a perspective view of the cap from below;
Fig. 4d shows the cap and the plug as separate elements; and
Fig. 5 shows a flowchart indicating the manufacturing process.

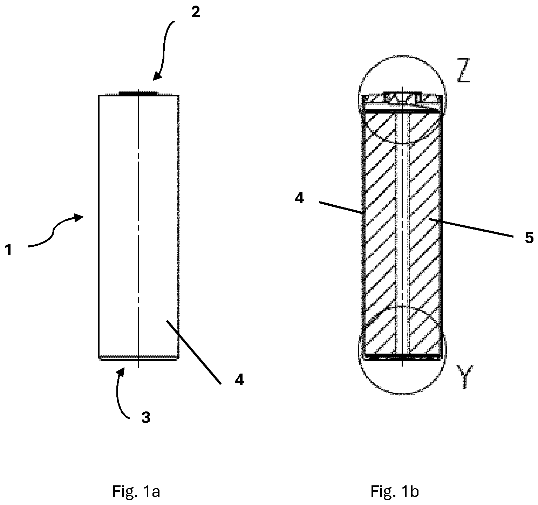

Fig. 1a and 1b show a cylindrically shaped rechargeable energy storage cell 1 according to the invention of the lithium-ion type, commonly also referred to 18650 and 21700-types. However, the invention shall not be limited to lithium-ion batteries as such and these kinds of cell size and geometries but any kind of small-scale rechargeable batteries, preferably of cylindrical shape, shall be encompassed by the scope of the invention.

Energy storage cells commonly comprise a first electrical terminal and separated therefrom a second electrical terminal for providing the corresponding opposite charge or load.

In the shown embodiment, one end of the cell 1 forms an anode 2 while the opposite end forms a cathode 3, which is integral with and thus electrically conductively connected to the cylindrically shaped shell of the housing 4.

The housing 4 is configured to receive a power generator and storage element 5. This element 5 is made, as generally known, by a so-called jellyroll structure formed of a plurality of spirally wound cathode, anode and separator elements and an electrolyte being inserted therebetween.

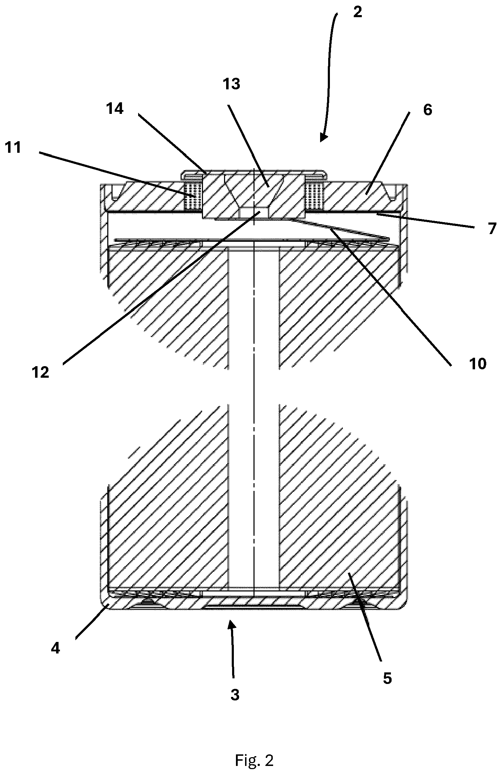

Fig. 2 shows enlarged views of the electrical terminals 2 and 3 of the cell 1 in cross-section.

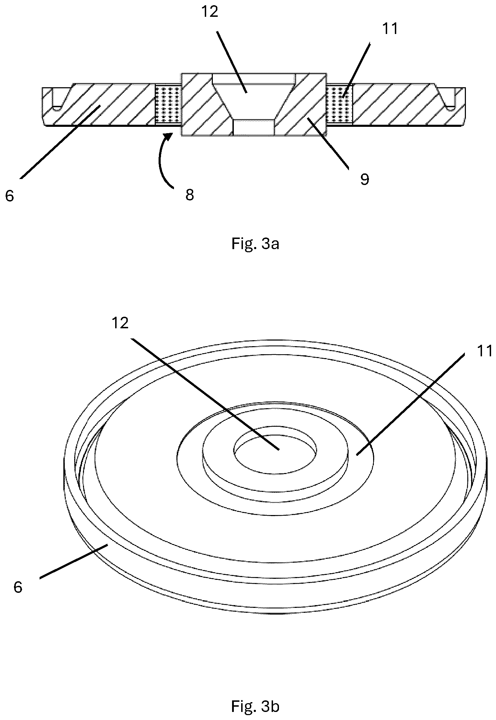

While the cathode 3 is integrally formed with the housing 4, the opposite end of the housing 4 is open and configured to receive a lid 6. The lid 6 is separately shown in Figs. 3a and 3b.

The lid 6 will be inserted into the upper open end of the housing 4 and connected thereto, e.g. by laser-welding. Towards the inside of the housing 4 the lid 6 is provided with an insulation disc 7.

The lid 6 comprises a central opening 8, which receives an insert 9. The insert 9 will be connected to the power generator and storage element 5 by means of an electrically conductive connecting element 10, as commonly known. Thus, according to the invention the insert 9 finally forms part of the anode 2.

The insert 9 is circumferentially surrounded by a ring-shaped insulation element 11 which is also configured to hermetically seal to the inside of the housing 4.

The insert 9 is centrally provided with an opening 12 which forms a port for the interior of the housing 4 to the outside, which will be used for a degassing process in the corresponding manufacturing process.

The opening 12 is configured to receive a plug 13, while in the embodiment shown the opening 12 and the plug 13 as regards shape and dimensions are configured to form a conical seal.

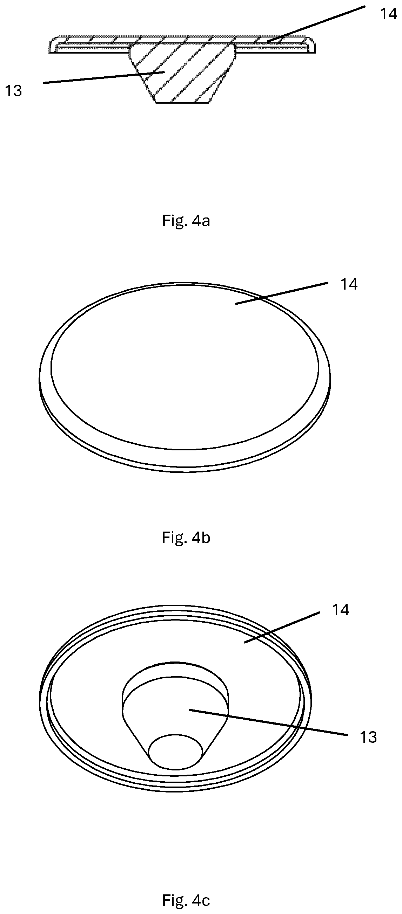

A cap 14 made of electrically conductive material, better shown in Figs. 4a - d, will be connected to the upper face of the insert 9, preferably laser-welded to it.

As shown in Fig. 2 the cap 14, basically a flat disc, overlaps the insert 9 and in diameter extends beyond the insulation element 11.

The plug 13, e.g. made of a polymer, is fixed to the bottom side of the cap 14, and such preassembled element could be mounted in such a way that the conical seal is finalized once the cap 14 rests flat on the upper face of the insert 9. Finally, the cap 14 is laser-welded to the insert 9.

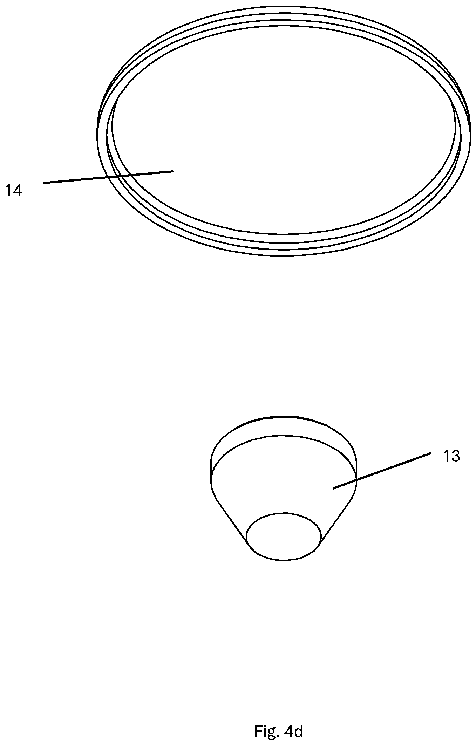

Alternatively, as indicated in Fig. 4d, the plug 13 is an element separate from the cap 14, which offers the possibility that the plug 13 can be used also as a temporary seal during some of the manufacturing steps.

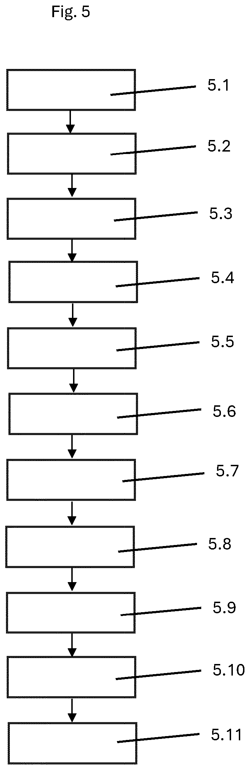

Fig. 5 shows a flow chart indicating the manufacturing method according to the invention.

After any pre-manufacturing method steps as well-known in the art, such as slurry preparation, electrode coating, calendaring, cutting stacking and winding to jellyrolls for providing the power generator and storage element, welding the taps inside etc., the method according to the present invention comprises a first step 5.1 in which a pre-manufactured cylindrically shaped housing 4 is provided such that it is open at one end thereof, basically up to the area of the outer cylindrical shell, while at the other end opposite thereto the shell is integrally closed which opposite end will form the cathode.

Then, in step 5.2 the jellyroll structure of the power generator and storage element 5 is inserted into the housing 4 followed by filling the electrolyte into the cell 1.

This will be followed in step 5.3 by fixing the lid 6 comprising the opening 8 to the upper open end of the housing 4, preferably by way of laser-welding.

Then, in step 5.4 the insert 9 will be mounted inside the opening 8 of the lid 9 in that the insulation element 11 is arranged and fixed in between in a hermetically sealed and electrically nonconductive manner.

The insert 9 needs to be electrically connected to the power generator and storage element 5, in step 5.5, basically by laser-welding a tab-like connecting element 10 to the insert 9.

According to the invention a pre-charging will be conducted in an optional step 5.6. Traditionally, after the cell 1 is assembled and filled with the electrolyte, the typical formation process is performed in order to add electrical charge to the power generator and storage element 5. Normally, the cell needs to move immediately to the formation in order to prevent internal corrosion from the start. Adding a pre-charge step, typically done at a lower voltage, will stabilize the electrolyte, basically also depending on its electro-chemical nature, and in particular will prevent the electrolyte from initiating unwanted side reactions with other components of the cell 1, e.g. the electrode active materials.

The pre-charging 5.6 is followed by the formation process in step 5.7, i.e. the charging and discharging process according to precisely defined current and voltage profiles in order to generate the SEI.

During pre-charging, but mainly during formation, depending on the electro-chemical characteristics of the electrolyte used, gas may be generated, which in the past particularly in case of smaller cells due to the lower gas quantity related to the relatively small volume of the cell had not been an issue.

The use of more effective electrolyte compositions, which is usually secret knowledge of the cell manufacturer, could now also for small-scale cells lead to excessive gas generation which needs to be removed, accordingly.

According to the invention, therefore a degassing step 5.8 is performed, typically setting the cell 1 under a vacuum environment, by using the opening 12 in the insert 9 provided therefor.

After degassing has been completed, the opening 12 may be used to add some additional fillings to the interior of the cell 1, or then may be closed by the plug 13 in step 5.9, in which the plug 13 and the opening 12 form a hermetically seal of conical shape.

Then, the cap 14, which rests flat on the upper face of the insert 9, will be electrically connected thereto by means of laser-welding, in step 5.10. The cap 14 and the plug 13 may be separate elements, but preferably are connected such as to form a pre-assembled unit.

Lastly and typically necessary, an aging process 5.11 is applied to the then closed cell 1.

While the pre-charging and the formation process could be performed with the opening 12 not being closed, the same may be closed during these steps in order to prevent any kind of contamination, preferably by the use a correspondingly shaped temporary plug, which is to be removed afterwards. Preferably, such temporary application already uses the plug 13 of the final assembly, since it provides the corresponding shape and structure for hermetically sealing the opening 12.

It becomes apparent that the specific configuration of a cell according to the invention in providing an opening in an insert for degassing during manufacturing, which insert at the same time will form part of the first electrical terminal, preferably the anode for the cell in use, by means of a conductive disc attached thereto under assembly of the seal, provides several advantages. First of all, degassing is enabled in particular for small-scale cells, in case the electro-chemical characteristics of newly developed electrolyte compositions to be used in connection with such cells will lead to higher gas generation. Secondly, the specific construction of an insert to be closed by a disc cap for the electrical terminal, e.g. anode, comprising a seal plug allows for the most cost-effective and reliable manufacturing of laser-welding with respect to all components of the cell.

## Claims

1. Energy storage cell comprising
a housing (4) receiving therein a power generator and storage element (5) and comprising opposite to each other a first electrical terminal (2;3) at one of its ends and a second electrical terminal (3;2) for the opposite charge at the other of its ends,
the end comprising the first electrical terminal (2;3) being closed by a lid (6),
**characterized in that**
said lid (6) comprises an opening (8), said opening (8) being configured to provide a degassing port during at least one manufacturing step for said cell and being further configured to receive an insert (9), and **in that** said insert (9) is being configured to form part of said first electrical terminal (2;3).

2. Energy storage cell according to claim 1, in which the insert (9) is circumferentially insulated against the lid (6) by means of a ring-shaped insulation element (11).

3. Energy storage cell according to claim 1 or 2, in which the insert is formed by a circular terminal element (9) being connectable to the power generator and storage element (5) and comprising a central opening (12).

4. Energy storage cell according to claim 3, in which the opening (12) of said circular terminal element (9) is configured to receive a plug (13) in a hermetically sealed matter.

5. Energy storage cell according to claim 4, in which said plug (13) and said opening (12) form a conical seal.

6. Energy storage cell according to claim 4 or 5, further comprising a cap (14) overlapping said circular terminal element (9) and being connected thereto in an electrically conductive manner.

7. Energy storage cell according to claim 6, in which the plug (13) is attached to the cap (14) in a preassembled matter.

8. Energy storage cell according to claim 6 or 7, in which the cap (14) is configured to be laser-welded to the circular terminal element (9).

9. Energy storage cell according to one of claims 2 to 8, in which the housing (4) is cylindrically shaped and the lid (6) is laser-welded to the housing (4).

10. Method for manufacturing a rechargeable energy storage cell comprising the steps of
- providing (5.1) a housing (4) being open at one end thereof and comprising opposite to each other a first electrical terminal (2;3) at one of its ends and a second electrical terminal (3;2) for the opposite charge at the other of its end;
- inserting (5.2) a power generator and storage element (5) into the housing (4) and filling an electrolyte into said power generator and storage element (5);
- fixing (5.3) a lid (6) to the open end of the housing (4), said lid (6) comprising an opening (8);
- inserting (5.4) an insert (9) into said opening (8) of the lid (6) under intermediate assembly of an insulation element (11) electrically insulating said insert (9) from said lid (6), said insert (9) comprising an opening (12);
- electrically conductively connecting (5.5) the insert (9) with said power generator and storage element (5);
- performing (5.7) a formation process;
- performing (5.8) a degassing process for discharging gas being formed by the electrolyte during the formation process through the opening (12) of the insert (9);
- inserting a plug (13) into the opening (12) of the insert (9) after the degassing process has been completed to hermetically seal said opening (12);
- fixing (5.10) a cap (14) to the insert (9) in an electrically conductive manner; and
- performing (5.11) an aging process.

11. Method according to claim 10, in which the plug (13) is preassembled to the cap (14) and comprising
- inserting said plug (13) into said opening (12) of the insert (9) in that said cap (14) lies flat on said insert (9).

12. Method according to claim 10 or 11, comprising
- laser-welding said cap (14) to said insert (9).

13. Method according to one of claims 10 to 12, further comprising
- performing (5.6) a pre-charging process before the formation process.

14. Method according to one of claims 10 to 13, further comprising
- temporarily sealing said opening (12) in the insert (9) during the formation process.
